# EUROPEAN PATENT APPLICATION

(11) **EP 4 541 835 A1**
(43) Date of publication of application: **23.04.2025**
(21) Application number: 23823938.8
(22) Date of filing: 14.06.2023
(51) Int. Cl.: C08G 63/60

(54) **BLOCK COPOLYMER**

(30) Priority: 14.06.2022 JP 2022095696
(71) Applicant: Kuraray Co., Ltd., Kurashiki-shi, Okayama 710-0801 (JP)
(72) Inventor: TAKAI Junya, Tsukuba-shi, Ibaraki 305-0841 (JP); FUKUHARA Tadahito, Tsukuba-shi, Ibaraki 305-0841 (JP); SAKON Kazuki, Tsukuba-shi, Ibaraki 305-0841 (JP); KONISHI Hiroyuki, Tsukuba-shi, Ibaraki 305-0841 (JP)
(74) Representative: D Young & Co LLP
(86) International application number: PCT/JP2023/022009
(87) International publication number: WO 2023/243648

(57) **Abstract**

Disclosed is a block copolymer containing a block structural unit (A) having a polylactic acid unit (a) as a main component and a block structural unit (B) having a polyester unit (b) as a main component, in which the polyester unit (b) contains a unit derived from an aliphatic diol (b1) and an aliphatic dicarboxylic acid (b2), the aliphatic diol (b1) is an aliphatic diol having an alkyl group as a branched chain and having 5 or more and 9 or less carbon atoms, the aliphatic dicarboxylic acid (b2) has 5 or more and 12 or less carbon atoms, and the block copolymer has a number average molecular weight of more than 10,000.

## Description

### Technical Field

The present invention relates to a block copolymer having excellent biodegradability, hydrolysis resistance, and handleability.

### Background Art

In view of environmental protection, bioplastics have been actively developed. Polylactic acid, which is a bioplastic, is expected to be used in a wide range of fields by using, as a raw material, plant-derived renewable resources such as corn produced by photosynthesis.

However, polylactic acid is known to be fragile, inferior in viscosity, flexibility, impact resistance, heat resistance, and the like, and to be easily hydrolyzed, as compared with petroleum-based plastics. Therefore, the use of polylactic acid as a resin material is sometimes limited. As an attempt to improve the defects of polylactic acid, for example, a technique of copolymerizing polyester having various characteristics and polylactic acid, a technique of adding additives such as a chain extender and a filler to form a composition (for example, see PTLs 1 to 4), and a technique of using a stereocomplex of polylactic acid (for example, see PTL 5) have been studied.

Further, applications using a composition containing polylactic acid have been studied. For example, a pressure-sensitive adhesive composition using a biodegradable raw material, which sufficiently satisfies pressure-sensitive adhesive properties, has been disclosed (for example, see PTL 6).

### Citation List

### Patent Literature

PTL 1: JP H09-100344 A
PTL 2: JP 2004-231772 A
PTL 3: JP 2005-330318 A
PTL 4: JP 2007-269842 A
PTL 5: JP 2011-153275 A
PTL 6: JP 2021-169586 A

### Summary of Invention

### Technical Problem

The resins or resin compositions containing polylactic acid described in PTLs 1 to 6 can be presumed to have a certain degree of biodegradability. Here, biodegradability is a property of being finally decomposed into water and carbon dioxide by a living organism such as a microorganism, and it is known that a resin containing polylactic acid exhibits biodegradability in compost. However, in view of environmental awareness, biodegradability is required to be exhibited in a wider range.

In addition, a final product made of a resin material is required to have hydrolysis resistance in order to suppress the progress of aged deterioration. Therefore, bioplastics need to have both biodegradability and hydrolysis resistance depending on the application.

In addition, bioplastics are desired to be easy to handle as resin materials.

Therefore, an object of the present invention is to provide a block copolymer having excellent biodegradability in activated sludge and compost, hydrolysis resistance, and handleability.

### Solution to Problem

As a result of intensive studies to solve the above problems, the present inventors have conceived of the present invention described below and found that the problems can be solved.

In other words, the present invention is as follows.
[1] A block copolymer containing a block structural unit (A) having a polylactic acid unit (a) as a main component and a block structural unit (B) having a polyester unit (b) as a main component,
   in which the polyester unit (b) contains a unit derived from an aliphatic diol (b1) and an aliphatic dicarboxylic acid (b2), the aliphatic diol (b1) is an aliphatic diol having an alkyl group as a branched chain and having 5 or more and 9 or less carbon atoms, the aliphatic dicarboxylic acid (b2) has 5 or more and 12 or less carbon atoms, and
   the block copolymer has a number average molecular weight of more than 10,000.
[2] The block copolymer according to [1], in which a content of the block structural unit (A) is 5% by mass or more and 95% by mass or less with respect to a total of 100% by mass of the block structural unit (A) and the block structural unit (B).
[3] The block copolymer according to [1] or [2], in which the aliphatic diol (b1) has a hydroxy group at both terminals of the main chain.
[4] The block copolymer according to any one of [1] to [3], in which the aliphatic diol (b1) is 3-methyl-1,5-pentanediol.
[5] The block copolymer according to any one of [1] to [4], in which the aliphatic dicarboxylic acid (b2) is adipic acid.
[6] The block copolymer according to any one of [1] to [5], in which the block structural unit (A) is composed of a constitutional unit derived from poly-L-lactic acid or a constitutional unit derived from poly-D-lactic acid.
[7] The block copolymer according to any one of [1] to [6], having a melting point of 125°C or higher and lower than 185°C.

### Advantageous Effects of Invention

According to the present invention, it is possible to provide a block copolymer excellent in biodegradability in activated sludge and compost, hydrolysis resistance, and handleability.

### Description of Embodiments

It will be explained in the following based on an example of the embodiments of the present invention. However, the embodiments shown below is an example for embodying the technical idea of the present invention, and the present invention is not limited to the following description.

In the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode. In addition, when there is a description pertaining to a numerical range of "XX to YY", the description means "XX or more and YY or less".

In the description herein, "- unit" (here, "-" indicates a polymer) means "a structural unit derived from -". For example, "polylactic acid unit" means "a structural unit derived from polylactic acid", and "polyester unit" means "a structural unit derived from polyester".

In the description herein, the "main chain" of a polymer means the longest molecular chain in the polymer molecule, unless otherwise specified. The term "branched chain" means a molecular chain other than the main chain in the molecule.

In the present invention, the term "solid state" means that there is no fluidity in a state of normal temperature (23°C) and no pressurization.

The block copolymer of the present embodiment contains a block structural unit (A) having a polylactic acid unit (a) as a main component and a block structural unit (B) having a polyester unit (b) as a main component, and has a number average molecular weight of more than 10,000.

The present inventors have conducted various studies on a formulation for imparting a wide range of biodegradability, excellent hydrolysis resistance, and handleability to a block copolymer. As a result, the present inventors have found that the inclusion of a block structural unit (A) and a block structural unit (B) is an effective formulation for achieving biodegradability not only in compost but also in activated sludge and excellent hydrolysis resistance. In addition, the present inventors have found that the block copolymer has a solid state and is excellent in handleability and further excellent in hydrolysis resistance as long as the number average molecular weight is within a specific numerical range.

The polyester unit (b) contains units derived from an aliphatic diol (b1) and an aliphatic dicarboxylic acid (b2), and is characterized in that the aliphatic diol (b1) is an aliphatic diol having an alkyl group as a branched chain and having 5 or more and 9 or less carbon atoms, and the aliphatic dicarboxylic acid (b2) has 5 or more and 12 or less carbon atoms.

It is presumed that the block structural unit (B) easily becomes an amorphous polymer by the above characteristics, and thus microorganisms easily enter into the polymer structure during biodegradation, and thus biodegradability in a wide range is excellent. In addition, it is considered that when the aliphatic diol (b1) has an alkyl group as a branched chain, the hydrolysis resistance is improved. On the other hand, when the block structural unit (B) is not an amorphous polymer, it is considered that microorganisms are less likely to enter the polymer structure, and as a result, the polymer structure is less likely to be biodegraded, and thus the effects of the present invention cannot be obtained. However, the fact that the block structural unit (B) is an amorphous polymer is only one of the factors that affects biodegradability and hydrolyzability. This is because it is considered that biodegradation and hydrolysis are caused by a combination of various factors such as whether or not microorganisms recognize an amorphous structure as a bait, whether or not enzymes and microorganisms are easily accessible, steric hindrance of the main chain, melting point, and crystallinity. Therefore, it does not mean that the effects of the present invention can be obtained in the case of an amorphous polymer. In addition, the reason why both a wide range of biodegradability and excellent hydrolysis resistance, which are in a contradictory relationship, can be realized by having the polyester unit (b) is not certain.

### [Block Structural Unit (A)]

### <Polylactic Acid Unit (a)>

The block structural unit (A) has a polylactic acid unit (a) as a main component.

The "main component" means a unit having the highest content percentage among the units constituting the block structural unit (A). Preferably, the "main component" is a unit having the highest content percentage in mass percentage among the units constituting the block structural unit (A).

The content percentage of the polylactic acid unit (a) in the block structural unit (A) is preferably 70% by mass or more, more preferably 80% by mass or more, still more preferably 85% by mass or more, and even more preferably 90% by mass or more, and the polylactic acid unit (a) may be contained in an amount of 100% by mass. On the other hand, the upper limit of the polylactic acid unit (a) contained in the block structural unit (A) is not limited, and is, for example, 100% by mass or less.

The polylactic acid constituting the polylactic acid unit (a) may be prepared by a direct condensation method of lactic acid or may be prepared by a ring-opening polymerization method of lactide. As the lactic acid, for example, at least one selected from the group consisting of L-lactic acid, D-lactic acid, and DL-lactic acid can be used. As the lactide, for example, at least one selected from the group consisting of L-lactide, D-lactide, DL-lactide, and meso-lactide can be used.

As the polylactic acid, poly-L-lactic acid, poly-D-lactic acid, poly-DL-lactic acid, or stereocomplex polylactic acid obtained by mixing poly-L-lactic acid and poly-D-lactic acid can be used. From the viewpoint of cost, availability of raw materials, and handleability of the block copolymer, the polylactic acid is preferably poly-L-lactic acid, poly-D-lactic acid, or poly-DL-lactic acid, and more preferably poly-L-lactic acid or poly-D-lactic acid.

On the other hand, from the viewpoint of cost and complexity of synthesis and processability of the block copolymer, the polylactic acid is preferably not a stereocomplex polylactic acid.

From the viewpoint of still more excellent biodegradability and hydrolysis resistance, the block structural unit (A) contains a constitutional unit derived from poly-L-lactic acid or a constitutional unit derived from poly-D-lactic acid in an amount of preferably 70% by mass or more, more preferably 80% by mass or more, and still more preferably 90% by mass or more. For example, in an example of a preferred embodiment, the block structural unit (A) is composed of a constitutional unit derived from poly-L-lactic acid or a constitutional unit derived from poly-D-lactic acid, that is, the constitutional unit derived from poly-L-lactic acid or the constitutional unit derived from poly-D-lactic acid is 100% by mass.

### <Unit (a') other than Polylactic Acid Unit (a)>

The block structural unit (A) may or may not contain a unit (a') other than the polylactic acid unit (a).

The monomer constituting the unit (a') is not particularly limited as long as the effects of the present invention are not impaired.

The content percentage of the unit (a') in the block structural unit (A) is preferably 30% by mass or less, more preferably 20% by mass or less, still more preferably 15% by mass or less, and even more preferably 10% by mass or less.

### <Number Average Molecular Weight of Block Structural Unit (A)>

The number average molecular weight of the block structural unit (A) is preferably 1,000 to 100,000, more preferably 5,000 to 25,000, and still more preferably 8,200 to 15,000. Within the above numerical range, more excellent hydrolysis resistance can be exhibited.

When the block copolymer has a plurality of block structural units (A), the number average molecular weight of the block structural units (A) means the total of all the blocks.

The number average molecular weight of the block structural unit (A) can be determined from the number average molecular weight of the block copolymer described later and the mass content of the block structural unit (A).

The number average molecular weight of the block structural unit (A) can be changed, for example, by adjusting the polymerization conditions of the polylactic acid.

### [Block Structural Unit (B)]

The block structural unit (B) has a polyester unit (b) as a main component.

The "main component" means a unit having the highest content percentage among the units constituting the block structural unit (B). Preferably, the "main component" is a unit having the highest content percentage in mass percentage among the units constituting the block structural unit (B).

The content percentage of the polyester unit (b) in the block structural unit (B) is preferably 50% by mass or more, more preferably 70% by mass or more, still more preferably 80% by mass or more, even more preferably 85% by mass or more, and particularly preferably 90% by mass or more, and the polylactic acid unit (b) may be contained in an amount of 100% by mass. In addition, the upper limit of the content percentage of the polyester unit (b) contained in the block structural unit (B) is not limited, and is, for example, 100% by mass or less.

The polyester unit (b) contains units derived from an aliphatic diol (b1) and an aliphatic dicarboxylic acid (b2). Specifically, the polyester unit (b) contains a unit derived from a polyester obtained by reacting the aliphatic diol (b1) and the aliphatic dicarboxylic acid (b2). The polyester unit (b) may or may not contain a unit derived from a monomer other than the aliphatic diol (b1) and the aliphatic dicarboxylic acid (b2).

The monomer other than the aliphatic diol (b1) and the aliphatic dicarboxylic acid (b2) is not particularly limited as long as the effects of the present invention are not impaired.

The total amount of the aliphatic diol (b1) and the aliphatic dicarboxylic acid (b2) in the polyester unit (b) is preferably 90 mol% or more, more preferably 95 mol% or more, still more preferably 99 mol% or more, and may be 100 mol%.

### <Aliphatic Diol (b1)>

The aliphatic diol (b1) is an aliphatic diol having an alkyl group as a branched chain and having 5 or more and 9 or less carbon atoms. The aliphatic diol has two hydroxy groups. Geminal diol is usually excluded from the aliphatic diol (b1). Preferably, the two hydroxy groups of the aliphatic diol (b1) are primary hydroxy groups. "Primary hydroxy group" refers to a hydroxy group bonded to a primary atom, preferably a primary carbon atom.

In addition, the "number of carbon atoms" is the number of carbon atoms of the entire aliphatic diol (b1) including the number of carbon atoms constituting the alkyl group.

The "branched chain" in the aliphatic diol (b1) refers to a partial structure branched from the "main chain" in the aliphatic diol (b 1), and preferably, a hydroxy group is not bonded to the terminal thereof.

The "main chain" in the aliphatic diol (b1) preferably refers to a partial structure which is a molecular chain having two primary hydroxy groups in a molecule as both terminals and composed of a plurality of carbon atoms connecting the two primary hydroxy groups. Therefore, it is preferable that two primary hydroxy groups in the aliphatic diol (b1) are positioned at both terminals of the "main chain" in the aliphatic diol (b1). In other words, it is preferable that the aliphatic diol (b1) has hydroxy groups at both terminals of the main chain. In this way, the aliphatic diol (b1) easily reacts with dicarboxylic acid, the triblock copolymer can be easily produced, and a block copolymer having more excellent biodegradability and hydrolysis resistance can be obtained.

When the number of carbon atoms of the aliphatic diol (b1) is 4 or less, the hydrolysis resistance may be poor, and when the number of carbon atoms of the aliphatic diol (b1) is 10 or more, the biodegradability may be poor.

The number of carbon atoms of the aliphatic diol (b1) is preferably 6 or more and 9 or less.

The number of carbon atoms of the main chain of the aliphatic diol (b1) depends on the number of carbon atoms of the branched chain, but is preferably 2 or more and 8 or less, more preferably 3 or more, still more preferably 4 or more, and even more preferably 5 or more.

When the aliphatic diol (b1) does not have a branched chain which is an alkyl group, the block structural unit (B) is likely to crystallize, and the hydrolysis resistance of the block structural unit (B) tends to deteriorate, and therefore the block copolymer cannot exhibit a wide range of biodegradability and excellent hydrolysis resistance.

The number of branched chains in the aliphatic diol (b1) is preferably 1 or 2, and more preferably 1. The branched chain is preferably at least one of a methyl group, an ethyl group, and a propyl group, more preferably at least one of a methyl group and an ethyl group, and still more preferably a methyl group. Further, when the aliphatic diol (b1) has a plurality of branched chains, the branched chains may be the same as or different from each other.

Examples of the aliphatic diol (b1) include 2,2-dimethyl-1,3-propanediol, 2-ethyl-1,3-propanediol, 2-ethyl-2-methyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, and 2-methyl-1,8-octanediol. The aliphatic diol (b1) is preferably at least one of 3-methyl-1,5-pentanediol and 2,4-diethyl-1,5-pentanediol, and more preferably 3-methyl-1,5-pentanediol.

The aliphatic diol (b1) may be used alone or may be used in combination of two or more kinds thereof.

### <Aliphatic Dicarboxylic Acid (b2)>

The aliphatic dicarboxylic acid (b2) has 5 or more and 12 or less carbon atoms.

When the number of carbon atoms of the aliphatic dicarboxylic acid (b2) is 4 or less, the hydrolysis resistance may be poor, and when the number of carbon atoms of the aliphatic dicarboxylic acid (b2) is 13 or more, the biodegradability may be poor.

From the viewpoint of hydrolysis resistance, the number of carbon atoms of the aliphatic dicarboxylic acid (b2) is preferably 5 or more, and more preferably 6 or more. On the other hand, from the viewpoint of biodegradability, the number of carbon atoms of the aliphatic dicarboxylic acid (b2) is preferably 10 or less, and more preferably 8 or less.

Examples of the aliphatic dicarboxylic acid (b2) include glutaric acid, adipic acid, pimelic acid, suberic acid, azelaic acid, sebacic acid, undecanedioic acid, and decanedicarboxylic acid. The aliphatic dicarboxylic acid (b2) is preferably adipic acid or sebacic acid, and more preferably adipic acid.

The aliphatic dicarboxylic acid (b2) may be used alone or may be used in combination of two or more kinds thereof.

### <Preferred Combination of Aliphatic Diol (b1) and Aliphatic Dicarboxylic Acid (b2)>

From the viewpoint that more excellent biodegradability and hydrolysis resistance can be exhibited, a combination of 3-methyl-1,5-pentanediol and adipic acid and a combination of 2,4-diethyl-1,5-pentanediol and adipic acid are preferred examples of the embodiment, and a combination of 3-methyl-1,5-pentanediol and adipic acid is a more preferred example of the embodiment.

### <Percentage of Aliphatic Diol (b1) and Aliphatic Dicarboxylic Acid (b2)>

When the aliphatic diol (b1) and the aliphatic dicarboxylic acid (b2) are reacted, the charged molar ratio [aliphatic diol (b1)/aliphatic dicarboxylic acid (b2)] is preferably 1.4/1 to 1/1.4, and more preferably 1.2/1 to 1/1.2.

### <Unit (b') other than Polyester Unit (b)>

The block structural unit (B) may or may not contain a unit (b') other than the polyester unit (b).

The monomer constituting the unit (b') is not particularly limited as long as the effects of the present invention are not impaired.

The content percentage of the unit (b') in the block structural unit (B) is preferably 50% by mass or less, more preferably 30% by mass or less, still more preferably 20% by mass or less, even more preferably 15% by mass or less, and particularly preferably 10% by mass or less.

### <Number Average Molecular Weight of Block Structural Unit (B)>

The number average molecular weight of the block structural unit (B) is preferably 2,500 or more, more preferably 4,000 or more, and still more preferably 5,000 or more. On the other hand, the number average molecular weight of the block structural unit (B) is preferably less than 100,000, more preferably less than 50,000, still more preferably less than 40,000, even more preferably less than 36,000, and yet still more preferably less than 25,000, and may be less than 20,000 or less than 15,000.

Within the above numerical range, the block copolymer tends to be excellent in flexibility and impact resistance.

The number average molecular weight of the block structural unit (B) can be obtained by gel permeation chromatography (GPC), and specifically can be measured by the method described in Examples. In addition, the number average molecular weight of the block structural unit (B) can also be obtained from the number average molecular weight of a block copolymer described later and the mass content of the block structural unit (B).

The number average molecular weight of the block structural unit (B) can be changed, for example, by adjusting the polymerization conditions of the aliphatic diol (b1) and the aliphatic dicarboxylic acid (b2).

### [Structural Unit Percentage]

The content of the block structural unit (A) is preferably 5% by mass or more and 95% by mass or less, with respect to 100% by mass of the total of the block structural unit (A) and the block structural unit (B).

When the percentage of the block structural unit (A) is 5% by mass or more, the handleability of the block copolymer tends to be more excellent. On the other hand, when the percentage of the block structural unit (A) is 95% by mass or less, the flexibility and impact resistance of the block copolymer tend to be excellent.

From the viewpoint of handleability, the percentage of the block structural unit (A) is more preferably 10% by mass or more, and still more preferably 15% by mass or more. On the other hand, from the viewpoint of flexibility and impact resistance, the percentage of the block structural unit (A) is more preferably 80% by mass or less, still more preferably 75% by mass or less, even more preferably 70% by mass or less, and yet still more preferably 60% by mass or less.

The percentage of the block structural unit (A) can be determined by ¹H-NMR, and specifically, can be measured by the method described in Examples.

The total content percentage of the block structural unit (A) and the block structural unit (B) in the block copolymer is preferably 90% by mass or more, more preferably 95% by mass or more, and may be 100% by mass. On the other hand, the upper limit of the total content percentage of the block structural unit (A) and the block structural unit (B) in the block copolymer is not limited, and is, for example, 100% by mass or less.

The block copolymer may or may not contain a unit other than the block structural unit (A) and the block structural unit (B).

The unit other than the block structural unit (A) and the block structural unit (B) is not particularly limited as long as the effects of the present invention are not impaired.

The content percentage of the unit other than the block structural unit (A) and the block structural unit (B) in the block copolymer is preferably 10% by mass or less, and more preferably 5% by mass or less.

### [Number Average Molecular Weight of Block Copolymer]

The number average molecular weight of the block copolymer is more than 10,000.

In a case where the number average molecular weight of the block copolymer is 10,000 or less, the block copolymer may become liquid and handleability may deteriorate. In addition, hydrolysis resistance tends to deteriorate.

From the viewpoint of handleability and hydrolysis resistance, the number average molecular weight of the block copolymer is preferably 12,000 or more, more preferably 15,000 or more, and still more preferably 18,000 or more.

From the viewpoint of processability, the number average molecular weight of the block copolymer is preferably less than 100,000, more preferably less than 82,000, still more preferably less than 60,000, even more preferably 58,000 or less, yet still more preferably 44,000 or less, yet even more preferably 35,000 or less, and may be 30,000 or less.

The number average molecular weight of the block copolymer can be obtained by gel permeation chromatography (GPC), and specifically can be measured by the method described in Examples.

The number average molecular weight of the block copolymer can be adjusted by, for example, the number average molecular weight of the block structural unit (B), the number average molecular weight of the block structural unit (A), and the number of each block structural unit. The number average molecular weight of the block structural unit (B) can be changed, for example, by adjusting the polymerization conditions of the aliphatic diol (b1) and the aliphatic dicarboxylic acid (b2). The number average molecular weight of the block structural unit (A) can be changed, for example, by adjusting the polymerization conditions of the polylactic acid.

### [Bonding Form of Block Copolymer]

The bonding form of the block copolymer is preferably a triblock type or a diblock type, and more preferably a triblock type. The block copolymer may be a mixture of a triblock type and a diblock type. Specifically, the bonding form is preferably [block structural unit (A)]-[block structural unit (B)]-[block structural unit (A)].

### [Melting Point of Block Copolymer]

The melting point of the block copolymer is preferably 125°C or higher and lower than 185°C, more preferably 130°C or higher and 180°C or lower, and still more preferably 140°C or higher and 170°C or lower. **In** a case where the melting point of the block copolymer is within the above-described numerical range, handleability, hydrolysis resistance, and biodegradability are more easily improved.

The melting point of the block copolymer can be determined by a differential scanning calorimeter, and specifically, can be measured by the method described in Examples.

### <Glass Transition Temperature of Block Copolymer>

The glass transition temperature of the block copolymer is preferably -80°C or higher and -15°C or lower. Within the above-described numerical range, the block copolymer tends to be excellent in flexibility and impact resistance.

From the viewpoint of low-temperature properties such as impact resistance at low temperature, the glass transition temperature of the block copolymer is more preferably -20°C or lower, still more preferably -25°C or lower, and may be -30°C or lower, may be -40°C or lower, or may be -50°C or lower.

The lower limit value of the glass transition temperature of the block copolymer is preferably low, but may be, for example, -75°C or higher, may be -70°C or higher, may be -65°C or higher, or may be -60°C or higher.

The glass transition temperature of the block copolymer can be determined by differential scanning calorimetry, and specifically, can be measured by the method described in Examples.

### (Hydrolysis Resistance of Block Copolymer)

The hydrolysis resistance of the block copolymer can be evaluated by, for example, a method described in Examples in which a test sample obtained by dissolving a block copolymer in chloroform at a concentration of 10% by mass, casting the solution onto a glass plate to prepare a film having a thickness of 200 µm, and cutting the film so as to have a weight of 0.15 g is immersed in 50 mL of ion-exchange water having a pH of 7, left to stand at 50°C, and measured for a period of time in which the number average molecular weight is less than 90% of the initial number average molecular weight by measuring the number average molecular weight at every predetermined time. The hydrolysis resistance of the block copolymer is not particularly limited, but the period of time in which the number average molecular weight is less than 90% of the initial number average molecular weight is preferably 50 hours or more, more preferably 100 hours or more, still more preferably 150 hours or more, even more preferably 200 hours or more, particularly preferably 250 hours or more, and most preferably more than 400 hours. In a case where the hydrolysis resistance of the block copolymer is in the above-described range, for example, a product having excellent long-term reliability of mechanical properties can be produced using the block copolymer.

### (Biodegradability of Block Copolymer in Compost)

The biodegradability of the block copolymer in compost can be measured, for example, by the method described in Examples in accordance with ISO 14855-2:2018. The biodegradability of the block copolymer in compost is not particularly limited, but the decomposition rate after 15 days is preferably 5% by mass or more, more preferably 10% by mass or more, and still more preferably 20% by mass or more. In a case where the biodegradability of the block copolymer in compost is in the above-described range, for example, it is possible to produce a product having excellent compost biodegradability and a small environmental load by using the block copolymer.

### (Biodegradability of Block Copolymer in Activated Sludge)

The biodegradability of the block copolymer in activated sludge can be measured, for example, by the method described in Examples in accordance with the method in accordance with ISO 14851:2019. The biodegradability of the block copolymer in activated sludge is not particularly limited, but the decomposition rate after 90 days is preferably 5% by mass or more. In a case where the biodegradability of the block copolymer in activated sludge is in the above-described range, for example, it is possible to produce a product having excellent biodegradability in a wastewater treatment facility and having a small environmental load by using the block copolymer.

### [Method for Producing Block Copolymer]

As a method for producing the block copolymer, a known production method can be employed.
(1) The known method for producing the block copolymer may be, for example, a method in which a polyester constituting the polyester unit (b) is synthesized, and the polyester and lactide are subjected to a polymerization reaction.
   The polyester can be synthesized by a known method. For example, the polyester can be synthesized by reacting the aliphatic diol (b1) and the aliphatic dicarboxylic acid (b2) using an esterification catalyst (for example, tin octylate, tin chloride, or tin oxide).
   When the polyester and lactide are subjected to a polymerization reaction, it is preferable to use a ring-opening polymerization catalyst (for example, tin octylate, tin chloride, or tin oxide). Examples of the polymerization reaction include solution polymerization, melt polymerization, and interfacial polycondensation, and known polymerization reaction conditions can be set for any of these.
(2) In addition, the known method for producing the block copolymer may be, for example, a method in which a polylactic acid constituting the polylactic acid unit (a) and a polyester constituting the polyester unit (b) are each synthesized, and the polylactic acid and the polyester are reacted.

The polylactic acid can be synthesized by a known method. For example, lactic acid may be reacted by a direct condensation method to synthesize polylactic acid, or lactide may be reacted by a ring-opening polymerization method to synthesize polylactic acid.

When the polylactic acid and the polyester are subjected to a polymerization reaction, it is preferable to use an esterification catalyst (for example, tin octylate, tin chloride, or tin oxide). Examples of the polymerization reaction include solution polymerization, melt polymerization, and interfacial polycondensation, and known polymerization reaction conditions can be set for any of these.

### Examples

Hereinafter, the present invention will be specifically described with reference to Examples and Comparative Examples, but the present invention is not limited thereto.

The compounds used in Examples and Comparative Examples are as follows.
3-methyl-1,5-pentanediol (manufactured by KURARAY CO., Ltd.)
Adipic acid (manufactured by Tokyo Chemical Industry Co., Ltd.)
Tin octylate (manufactured by Tokyo Chemical Industry Co., Ltd.)
Toluene (manufactured by Kishida Chemical Co., Ltd.)
L-lactide (manufactured by Tokyo Chemical Industry Co., Ltd.)
Methanol (manufactured by FUJIFILM Wako Pure Chemical Corporation)
2,4-Diethyl-1,5-pentanediol (manufactured by Tokyo Chemical Industry Co., Ltd.)
2-Methyl-1,3-propanediol (manufactured by Tokyo Chemical Industry Co., Ltd.)
Succinic acid (manufactured by Tokyo Chemical Industry Co., Ltd.)
1,4-Butanediol (manufactured by Tokyo Chemical Industry Co., Ltd.)

The physical properties of the block copolymers in Examples and Comparative Examples were measured or evaluated by the following methods.

### (1) Number average molecular weight (Mn)

The number average molecular weight (Mn) of the block copolymer was determined by gel permeation chromatography (GPC) in terms of standard polystyrene. The Mn of the block structural unit (B) was determined from the Mn of the block copolymer and the mass content ratio of the block structural unit (B).

### <Measurement Conditions of GPC>

Apparatus: GPC apparatus "HLC-8220" manufactured by Tosoh Corporation
Separation column: "TSKgel SuperMultiporeHZ-M (column diameter = 4.6 mm, column length = 15 cm)" (manufactured by Tosoh Corporation) (used by connecting two columns in series)
Eluent: tetrahydrofuran (THF)
Eluent flow rate: 0.35 mL/min
Column temperature: 40°C
Detection method: differential refractive index (RI)
Injection volume: 10 µL
Concentration: 1 mg/1 mL (block copolymer/THF)

### (2) Hard ratio (% by mass) (mass content percentage of the block structural unit (A) having the polylactic acid unit (a) as a main component)

The hard ratio of the block copolymer was calculated by ¹H-NMR. The molar ratio of the block structural unit (A) and the block structural unit (B) was calculated from the ratio of the areas of the signal in the vicinity of 5.2 ppm derived from the polylactic acid unit and the signal in the vicinity of 0.9 ppm derived from the structural unit (B) having the polyester unit (b) as a main component in the obtained spectrum. The mass ratio was obtained by multiplying the molar ratio by the molecular weight of each monomer structural unit, and the mass ratio of the block structural unit (A) when the total of the mass ratios was adjusted to be 100 was defined as the hard ratio.

### <Measurement Conditions of ¹H-NMR>

Apparatus: nuclear magnetic resonance apparatus "JNM-ECX400" manufactured by JEOL Ltd.
Solvent: deuterated chloroform
Measurement temperature: 50°C
Number of integration: 1024 times
Measurement conditions: temperature-rising rate 10°C/min

### (3) Biodegradability (compost)

The biodegradability in compost was measured according to the method in accordance with ISO 14855-2:2018. When the decomposition rate after 15 days was 20% by mass or more, it was evaluated as A, when it was 10% by mass or more and less than 20% by mass, it was evaluated as B, when it was 5% by mass or more and less than 10% by mass, it was evaluated as C, and when it was less than 5% by mass, it was evaluated as D.

### (4) Biodegradability (activated sludge)

The biodegradability in activated sludge was measured according to the method in accordance with ISO 14851:2019. When the decomposition rate after 90 days was 5% by mass or more, it was evaluated as A, and when it was less than 5% by mass, it was evaluated as B.

### (5) Handleability

The properties of the block copolymer at normal temperature (23°C) were evaluated as A in the case of a solid state and as B in the case of a liquid state.

### (6) Hydrolysis resistance (h)

Each of the block copolymers was dissolved in chloroform at a concentration of 10% by mass, and the resulting solution was cast onto a glass plate to prepare a film having a thickness of 200 µm. The film was cut out so as to have a weight of 0.15 g and used as a test sample. The obtained test sample was immersed in 50 mL of ion-exchange water having a pH of 7, left to stand at 50°C, the number average molecular weight was measured at every predetermined time (specifically, at every 50 hours), and evaluated based on the elapsed time until the number average molecular weight became less than 90% of the initial number average molecular weight from the approximate curve of the plot.

Note that, when the elapsed time exceeds 400 h, it is described as "> 400 h" in Table 1-1 and Table 1-2.

### (7) Melting point (°C)

The melting point of the block copolymer was measured by a differential scanning calorimeter according to the method described in JIS K 7121:2012. When a plurality of peaks was observed, the melting point derived from the peak on the highest temperature side was defined as the melting point of the block copolymer.

Apparatus: differential scanning calorimeter "DSC822" manufactured by Mettler-Toledo International Inc.

Measurement conditions: temperature-rising rate 10°C/min

### (8) Glass transition temperature (°C)

The glass transition temperature of the block copolymer was measured by a differential scanning calorimeter according to the method described in JIS K 7121:2012.

Apparatus: differential scanning calorimeter "DSC822" manufactured by Mettler-Toledo International Inc.

Measurement conditions: temperature-rising rate 10°C/min

### [Example 1]

A flask equipped with a device capable of distilling off generated liquid and a vacuum pump was charged with 3-methyl-1,5-pentanediol and adipic acid in a molar ratio of 3-methyl-1,5-pentanediol/adipic acid = 1.1/1, tin octylate was added so that the amount thereof was 0.1% by mass based on the total weight of 3-methyl-1,5-pentanediol and adipic acid, and the mixture was heated at normal pressure and 160°C for 3 hours and at 220°C for 3 hours under a nitrogen atmosphere, and the reaction was carried out while distilling off water. Next, the pressure was reduced to 2,000 Pa and the mixture was reacted for 3 hours, and then the pressure was reduced to 80 Pa and the mixture was reacted while being appropriately checked until the number average molecular weight reached 9,500, thereby synthesizing a polymer composed of a structural unit (B') having a polyester unit as a main component. After completion of the reaction, the pressure was returned to normal pressure, the temperature was cooled to 80°C, toluene was added to dilute the solid content concentration to 40% by mass, and then the above-described toluene solution was poured into methanol in an amount twice the total amount of the solution. The supernatant liquid was discarded, and methanol in an amount equal to the amount of the poured toluene solution was added again for washing. The supernatant liquid was discarded, and the recovered insoluble fraction was dried at 40°C in a vacuum drier to remove organic volatile matter, thereby obtaining a polymer composed of a structural unit (B') having a polyester unit as a main component. The structure of both terminals of the obtained polymer composed of the structural unit (B') was confirmed to be mainly a hydroxy group derived from 3-methyl-1,5-pentanediol by ¹H-NMR measurement.

Toluene was added again to the purified polymer composed of the structural unit (B'), and the mixture was diluted so that the solid content concentration was 33% by mass, and then the temperature was raised to 140°C to distill off 10% by mass of the added toluene, thereby performing dehydration in the system.

Thereafter, the mixture was cooled to 80°C, the polymer composed of the structural unit (B') and L-lactide were added such that the mass ratio of (the polymer composed of the structural unit (B'))/(L-lactide) was 50/50, and the above-described toluene of the weight portion removed by distillation was further added to adjust the solid content concentration to 50% by mass. Thereafter, when the temperature was raised to 100°C, tin octylate was added in an amount of 0.1% by mass with respect to the polymer composed of the structural unit (B'), and the mixture was reacted for 4 hours to obtain a toluene solution of a block copolymer composed of a block structural unit (A) having a polylactic acid unit (a) as a main component and a block structural unit (B) having a polyester unit (b) as a main component.

Toluene was added to this solution to dilute the solid content concentration to 40% by mass, and then the above-mentioned toluene solution was poured into methanol in an amount twice the total amount of the solution to precipitate a solid. The supernatant methanol was discarded, and methanol in an amount equal to the amount of the poured toluene solution was added again for washing. The methanol was discarded, and the recovered solid was dried at 40°C in a vacuum drier to remove organic volatile matter, thereby obtaining a block copolymer composed of a block structural unit (A) having a polylactic acid unit (a) as a main component and a block structural unit (B) having a polyester unit (b) as a main component. By ¹H-NMR measurement of the obtained block copolymer, it was confirmed that the peak derived from methylene adjacent to both terminals of the hydroxy group of the polymer composed of the structural unit (B') disappeared, and a triblock body composed of a structure of [block structural unit (A)]-[block structural unit (B)]-[block structural unit (A)] was mainly produced.

The obtained block copolymer was subjected to the above-mentioned measurements and evaluations, and the results are shown in Table 1-1. The obtained block copolymer had good handleability, biodegradability, and hydrolysis resistance.

### [Examples 2 to 5]

A block copolymer composed of a block structural unit (A) having a polylactic acid unit (a) as a main component and a block structural unit (B) having a polyester unit (b) as a main component was synthesized in the same manner as in Example 1, except that the number average molecular weight was adjusted by adjusting the reaction time during the synthesis of the polymer composed of the structural unit (B') having a polyester unit as a main component, the mass ratio of the L-lactide used was changed, and the dilution concentration during the synthesis was appropriately changed to a concentration that was easy to handle.

The obtained block copolymer was subjected to the above-mentioned measurements and evaluations. The results are shown in Table 1-1. The obtained block copolymer had good handleability, biodegradability, and hydrolysis resistance.

### [Example 6]

A block copolymer composed of a block structural unit (A) having a polylactic acid unit (a) as a main component and a block structural unit (B) having a polyester unit (b) as a main component was synthesized in the same manner as in Example 1, except that 2,4-diethyl-1,5-pentanediol was used instead of 3-methyl-1,5-pentanediol, and the number average molecular weight was adjusted by adjusting the reaction time during the synthesis of a polymer composed of a structural unit (B') having a polyester unit as a main component.

The obtained block copolymer was subjected to the above-mentioned measurements and evaluations. The results are shown in Table 1-1. The obtained block copolymer had good handleability, biodegradability, and hydrolysis resistance.

### [Comparative Example 1]

A block copolymer composed of a block structural unit (A) having a polylactic acid unit (a) as a main component and a block structural unit (B) having a polyester unit (b) as a main component was synthesized in the same manner as in Example 1, except that the number average molecular weight was adjusted by adjusting the reaction time during the synthesis of the polymer composed of the structural unit (B') having a polyester unit as a main component, the mass ratio of the L-lactide used was changed, and the dilution concentration during the synthesis was appropriately changed to a concentration that was easy to handle.

The obtained block copolymer was subjected to the above-mentioned measurements and evaluations. The results are shown in Table 1-2. The melting point of the obtained block copolymer was not observed probably because the number average molecular weight was too low.

In the block copolymer obtained in Comparative Example 1, good handleability was not obtained, and the hydrolysis resistance was lower than in Examples. The reason for this result is considered to be that the number average molecular weight of the block copolymer was too low.

### [Comparative Example 2]

A block copolymer composed of a block structural unit (A) having a polylactic acid unit (a) as a main component and a block structural unit having a polyester unit as a main component was synthesized in the same manner as in Example 1, except that 2-methyl-1,3-propanediol was used instead of 3-methyl-1,5-pentanediol, the number average molecular weight was adjusted by adjusting the reaction time during the synthesis of the polymer composed of the structural unit (B') having a polyester unit as a main component, and the dilution concentration during the synthesis was appropriately changed to a concentration that was easy to handle.

The obtained block copolymer was subjected to the above-mentioned measurements and evaluations. The evaluation results are shown in Table 1-2.

The block copolymer obtained in Comparative Example 2 had lower hydrolysis resistance than the block copolymers obtained in Examples. The reason for this result is considered to be that the number of carbon atoms of the diol used as a raw material is less than 5.

### [Comparative Example 3]

A block copolymer composed of a block structural unit (A) having a polylactic acid unit (a) as a main component and a block structural unit having a polyester unit as a main component was synthesized in the same manner as in Example 1, except that succinic acid was used instead of adipic acid, the number average molecular weight was adjusted by adjusting the reaction time during the synthesis of the polymer composed of the structural unit (B') having a polyester unit as a main component, and the dilution concentration during the synthesis was appropriately changed to a concentration that was easy to handle.

The obtained block copolymer was subjected to the above-mentioned measurements and evaluations. The evaluation results are shown in Table 1-2.

The block copolymer obtained in Comparative Example 3 had lower hydrolysis resistance than the block copolymers obtained in Examples. The reason for this result is considered to be that the number of carbon atoms of the dicarboxylic acid used as a raw material is less than 5.

### [Comparative Example 4]

A block copolymer composed of a block structural unit (A) having a polylactic acid unit (a) as a main component and a block structural unit having a polyester unit as a main component was synthesized in the same manner as in Example 1, except that 1,4-butanediol was used instead of 3-methyl-1,5-pentanediol, succinic acid was used instead of adipic acid, the number average molecular weight was adjusted by adjusting the reaction time during the synthesis of the polymer composed of the structural unit (B') having a polyester unit as a main component, and the dilution concentration during the synthesis was appropriately changed to a concentration that was easy to handle.

The obtained block copolymer was subjected to the above-mentioned measurements and evaluations. The evaluation results are shown in Table 1-2.

In the block copolymer obtained in Comparative Example 4, good biodegradability was not obtained, and the hydrolysis resistance was lower than in Examples. The reason for this result is considered to be that the number of carbon atoms of the dicarboxylic acid used as a raw material is less than 5, and the number of carbon atoms of the diol is less than 5 and the diol does not have an alkyl branched chain.

**Table 1-1**

| | | Example 1 | Example 2 | Example 3 |
|---|---|---|---|---|
| Structure | Structural unit A-B-A | PLLA-MPD/AA-PLLA | PLLA-MPD/AA-PLLA | PLLA-MPD/AA-PLLA |
| | Mn of (B) | 9,500 | 6,000 | 9,600 |
| | Mn of copolymer | 19,000 | 12,000 | 32,000 |
| | Hard ratio [% by mass] | 50 | 50 | 70 |
| Evaluation | Biodegradability (compost) | A | A | A |
| | Biodegradability (activated sludge) | A | A | A |
| | Handleability | A | A | A |
| | Hydrolysis resistance [h] | > 400 | > 400 | > 400 |
| | Melting point [°C] | 141 | 135 | 157 |
| | Glass transition temperature [°C] | -56 | -58 | -59 |

**Table 1-1 (continued)**

| | | Example 4 | Example 5 | Example 6 |
|---|---|---|---|---|
| Structure | Structural unit A-B-A | PLLA-MPD/AA-PLLA | PLLA-MPD/AA-PLLA | PLLA-DEPD/AA-PLLA |
| | Mn of (B) | 36,550 | 34,800 | 10,000 |
| | Mn of copolymer | 43,000 | 58,000 | 20,000 |
| | Hard ratio [% by mass] | 15 | 40 | 50 |
| Evaluation | Biodegradability (compost) | A | A | A |
| | Biodegradability (activated sludge) | A | A | A |
| | Handleability | A | A | A |
| | Hydrolysis resistance [h] | > 400 | > 400 | 350 |
| | Melting point [°C] | 150 | 159 | 142 |
| | Glass transition temperature [°C] | -57 | -57 | -55 |

**Table 1-2**

| | | Comparative Example 1 | Comparative Example 2 | Comparative Example 3 | Comparative Example 4 |
|---|---|---|---|---|---|
| Structure | Structural unit A-B-A | PLLA-MPD/AA-PLLA | PLLA-MPDiol/AA-PLLA | PLLA-MPD/SA-PLLA | PLLA-BD/SA-PLLA |
| | Mn of (B) | 7,600 | 10,000 | 20,000 | 10,000 |
| | Mn of copolymer | 9,500 | 20,000 | 40,000 | 20,000 |
| | Hard ratio [% by mass] | 20 | 50 | 50 | 50 |
| Evaluation | Biodegradability (compost) | A | A | A | C |
| | Biodegradability (activated sludge) | A | A | A | B |
| | Handleability | B | A | A | A |
| | Hydrolysis resistance [h] | 120 | 80 | 220 | 50 |
| | Melting point [°C] | - | 147 | 155 | 144 |
| | Glass transition temperature [°C] | -59 | -47 | -38 | -32 |

The compounds represented by the abbreviations in Tables 1-1 and 1-2 are as follows.
PLLA: poly-L-lactic acid
MPD: 3-methyl-1,5-pentanediol
DEPD: 2,4-diethyl-1,5-pentanediol
MPDiol: 2-methyl-1,3-propanediol
BD: 1,4-butanediol
AA: adipic acid
SA: succinic acid

As shown in Examples, the block copolymer of the present embodiment containing the block structural unit (A) having the specific polylactic acid unit (a) as a main component and the block structural unit (B) having the polyester unit (b) as a main component has good biodegradability and hydrolysis resistance, and is excellent in handleability because of being in a solid state. Therefore, the industrial usefulness of the block copolymer of the present embodiment is extremely high.

## Claims

1. A block copolymer comprising a block structural unit (A) having a polylactic acid unit (a) as a main component and a block structural unit (B) having a polyester unit (b) as a main component,
wherein the polyester unit (b) contains a unit derived from an aliphatic diol (b1) and an aliphatic dicarboxylic acid (b2), the aliphatic diol (b1) is an aliphatic diol having an alkyl group as a branched chain and having 5 or more and 9 or less carbon atoms, the aliphatic dicarboxylic acid (b2) has 5 or more and 12 or less carbon atoms, and
the block copolymer has a number average molecular weight of more than 10,000.

2. The block copolymer according to claim 1, wherein a content of the block structural unit (A) is 5% by mass or more and 95% by mass or less with respect to a total of 100% by mass of the block structural unit (A) and the block structural unit (B).

3. The block copolymer according to claim 1 or 2, wherein the aliphatic diol (b1) has a hydroxy group at both terminals of the main chain.

4. The block copolymer according to any one of claims 1 to 3, wherein the aliphatic diol (b1) is 3-methyl-1,5-pentanediol.

5. The block copolymer according to any one of claims 1 to 4, wherein the aliphatic dicarboxylic acid (b2) is adipic acid.

6. The block copolymer according to any one of claims 1 to 5, wherein the block structural unit (A) is composed of a constitutional unit derived from poly-L-lactic acid or a constitutional unit derived from poly-D-lactic acid.

7. The block copolymer according to any one of claims 1 to 6, having a melting point of 125°C or higher and lower than 185°C.
